Europäisches Patentamt

(19) European Patent Office

Office européen des brevets

(11) Publication number : **0 505 043 A1**

(12) **EUROPEAN PATENT APPLICATION**

(21) Application number : 92301594.5

(22) Date of filing : 26.02.92

(51) Int. Cl.⁵ : **H04N 17/00**

(30) Priority : 26.02.91 JP 31068/91

(43) Date of publication of application :
23.09.92 Bulletin 92/39

(84) Designated Contracting States :
**DE FR GB NL**

(71) Applicant : **KABUSHIKI KAISHA TOSHIBA
72, Horikawa-cho Saiwai-ku
Kawasaki-shi Kanagawa-ken 210 (JP)**

(72) Inventor : **Iga, Hiroyuki, c/o Intell.Property
Division
Toshiba Corporation, 1-1-1, Shibaura
Minato-ku, Tokyo (JP)**

(74) Representative : **Muir, Ian R. et al
HASELTINE LAKE & CO. Hazlitt House 28
Southampton Buildings Chancery Lane
London WC2A 1AT (GB)**

(54) **A system for detecting transmission path response for television signals.**

(57)    A system for detecting a transmission path response for television signals comprising a signal originating equipment and a receiving apparatus wherein the signal originating equipment includes a reference signal generator (20) for generating a quasi noise data series, a polarity reversing circuit (24) for reversing the polarity of the quasi noise data series and a composing arrangement (5, 21) for composing the quasi noise data series and the polarity reversed quasi noise data series reversed by the polarity reversing means (24) on two predetermined horizontal lines of a television signal at a prescribed period so as to transmit the composite television signal, and the receiving apparatus includes a receiving circuit (12) for receiving a television signal which is composed with a quasi noise data series and a polarity reversed quasi noise data series at a prescribed period and transmitted via a prescribed transmission path, a local reference signal generator (14) for generating a local reference signal having a data series corresponding to the quasi noise data series composed in the television signal, a polarity reversing circuit (26) for reversing the polarity of the local reference signal at a period corresponding to the reversed polarity period of the quasi noise data series, a convolution operating circuit (13) for performing a convoluting operation on both the quasi noise data series from the receiving circuit (12) and the local reference signal from the polarity reversing circuit (26), and a inter-field adding circuit (29) for adding the correlation signals output from the convolution operating circuit (13) before and after the reversed polarity period of the quasi noise data series together so as to detect a transmission characteristic of the transmission path.

EP 0 505 043 A1

Fig. 5

Fig. 7

The present invention relates generally to a system for detecting a transmission path response for television signals, and more particularly, to a system for detecting a transmission path response free from DC offsets for television signals.

In recent years, a system which detects characteristics of transmission paths including a transmission signal originating equipment and a receiving apparatus, and then equalizes waveform distortions of television signals has been developed in the television broadcasting. For instance, a deghosting system which transmits a GCR (Ghost Cancel Reference) signal as a deghosting reference signal by composing the GCR signal on the television signal and then removes ghosts by extracting the GCR signal at the receiving apparatus has been already marketed. As the GCR signal, an integrated (sin x)/x waveform signal at a leading end has been employed. The (sin x)/x wavefonm pulse at a leading end and a flat frequency characteristics range corresponding to the video band,

Further, in recent years, for establishing a sufficient S/N (signal to noise ratio), etc., a system for detecting a transmission path response by transmitting a quasi noise data series as a detection reference signal by composing the quasi noise data series on a television signal has been studied.

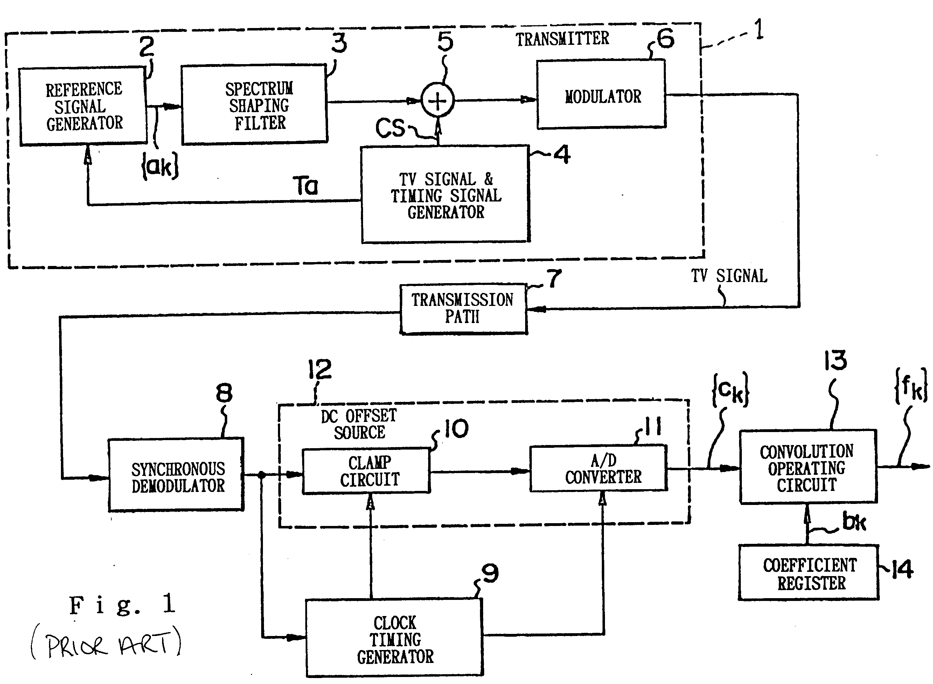

Shown in FIGURE 1 is a block diagram of a conventional transmission path response detection system which detects a transmission path response as an impulse response The basic principle of this system has been disclosed in Literature 1 (J. D. Wang et al. "Training Signal and Receiver Design for Multi-Path Channel Characterization for TV Broadcasting", IEEE Transactions on Vol. CE-36, No. 4, pp. 794-806, Nov. 1990).

The transmitter 1 comprises a reference signal generator 2, a spectrum shaping filter 3, a television signal and timing signal generator 4, an adder 5 and a modulator 6. The television signal and timing signal generator 4 generates a timing signal Ta as well as a television signal CS containing a synchronizing signal and a burst signal. The television signal CS is supplied to the adder 5, while the timing signal Ta is supplied to the reference signal generator 2. The reference signal generator 2 repeatedly generates a quasinoise data series {ak} five times at the timings of the 19th horizontal line signal H (H represents a horizontal period) and the 282th horizontal line signal (hereinafter these signals and their associated periods will be referred to as 19H signal, 282H signal, 19H period and 282H period for the simplicity of explanation). As is well known, the 19H period and the 282H period locate in vertical retrace line periods of odd and even field television signals, respectively. The quasi noise data series {ak} has a data rate of 2fsc (fsc represents a color subcarrier frequency, e.g., 3.579545 MHz in the NTSC system) and data length of (N - 1), that is, 63 (including 32 data of the logic "1" and 31 data of the logic "0").

This quasi noise data series {ak} is given to the adder 5 after roll off characteristics with fsc as the center frequency is given by the spectrum shaping filter 3. Further, as described in Literature 1, the spectrum shaping filter 3 is not necessarily to be a filter for effecting roll off characteristics. The adder 5 composes the spectrum shaped quasi noise data series {ak} onto the television signal CS.

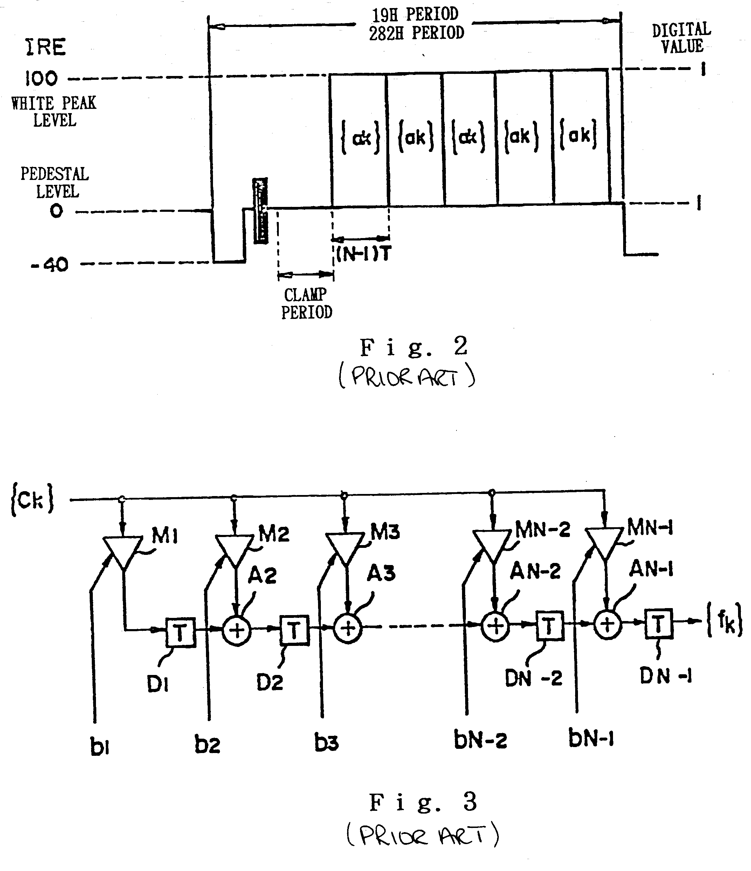

Shown in FIGURE 2 is a waveform diagram of the composite television signal output from the adder 5. As shown in FIGURE 2, five data of the quasi noise data series {ak} are placed on the 19H signal and the 282H signal of the television signal, respectively. The quasinoise data series {ak} is a binary data of the logic "1" and the logic "0", and the "1" level is set at the white peak level (100 IRE) and the "0" level is set at the pedestal level (0 IRE). Further, the pedestal level signal in a period (hereinafter referred to as clamp period) from burst signal to the first quasi noise data series {ak} is also produced by the reference signal generator 2.

The composite signal from the adder 5 is modulated by the modulator 6 in a manner of a vestigial sideband modulation, and then transmitted through the transmission path 7 as an output signal from the transmitter 1. Thus, the output signal, i.e., a television signal according to the NTSC color TV system, etc. composed with the quasi noise data series {ak} as a reference signal in the vertical retrace line period is transmitted. The transmission path 7 is normally in the space.

The television signal transmitted via the transmission path 7 is demodulated by a synchronous demodulator 8 in a receiver. A baseband television signal demodulated by the synchronous demodulator 8 is input to a clamp circuit 10 and a clock timing generator 9. The clamp circuit 10 clamps the television signal level at the 0 IRE level, during a prescribed clamp directed by the clock timing generator 9 (see FIGURE 2) so that the clamped signal output from the clamp circuit 10 is applied to an A/D converter 11. The A/D converter 11 digitizes the analog baseband television signal based on a 2fsc clock supplied from the clock timing generator 9. For convenience of explanation, the illustration of a low pass filter for removing alias noise is omitted herefrom. As will be described later, the clamp circuit 10 and the A/D converter 11 generate a DC offset $\Delta$, and therefore the combination of the clamp circuit 10 and the A/D converter 11 will be represented by a DC offset source 12.

Now a part of the digitized signal output from the A/D converter 11, which corresponds to the quasi noise data series {ak} composed onto the television signal at the transmission signal originating equipment is referred to as a received reference signal {ck}. A convolution operating circuit 13 is provided for performing a convoluting operation of the received reference signal {ck} and a local reference signal {bk} stored in a coefficient register 14 for finding a correlation between the signals {ck} and {bk}.

Shown in FIGURE 3 is a circuit diagram of the convolution operating circuit 13. The convolution operating circuit 13 is constituted by a conventional transversal filter. The received reference signal {ck} is applied to (N - 1) pieces of coefficient multipliers M1 through MN-1. While coefficients b1 through bN-1 of the local reference signal {bk} are also applied to the coefficient multipliers M1 through MN-1, respectively, from a coefficient register 14. Thus the coefficient multipliers M1 through MN-1. multiply the received referrence signal {ck} with the coefficients b1 through bN-1, respectively. The output of the coefficient multiplier M1 is applied to an adder A2 via a latch D1 which causes a delay of the unit time 1/(2fsc), and in the same manner the outputs of the coefficients M2 through MN-1 are applied to adders A2 through AN-1 respectively. The outputs of the adders A2 through AN-2 are applied to their following adders A3 through AN-1 via latches D2 through DN-2. Thus the adders A2 through AN-2 preform adding operations on two siganls input thereto. Thus, the received reference signals {ck} multiplied with their associated coefficients are added with other received reference signal {ck} which is also multiplied with its associated coefficient after delayed for the unit time. Thus the adder AN-1 outputs a correlation signal {fk} which is delayed for the unit time by the latch DN-1. That is, the convoluting operation of the received reference signal {ck} and the local reference signal {bk} is carried out by the transversal filters as shown in FIGURE 3.

The local reference signal {bk} stored in the coefficient register 14 corresponds to the quasi noise data series {ak}, in which the logic "0" replaced with the logic "-1". As a result of the logic change, the (N - 1) pieces of the coefficient multipliers M1 through MN-1 allow the received reference signal {ck} to pass therethrough without any change or allow the signal {ck} to pass therethrough after reversing its polarity. Therefore, at the timing when the local reference signal {bk} is not delayed from the received reference signal {ck}, the correlation signal {fk} becomes to the amplitude (N/2) corresponding to the number of the logics "1" of the quasi noise data series {ak}. Further, it is described in Literature 1 that if there is no distortion in the transmission path 7 the correlation signal {fk} is retained at the logic "0" at other timings.

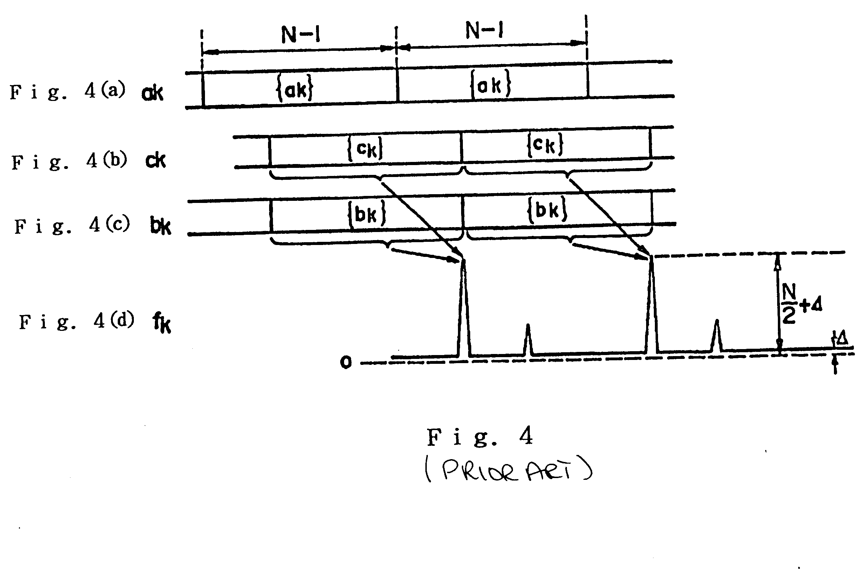

Shown in FIGURE 4 is an explanatory diagram for the relationships among the quasi noise data series {ak}, the local reference signal {bk}, the received reference signal {ck} and the correlation signal {fk}.

As shown in FIGURES 4(a) and 4(b), the quasi noise data series {ak} with a data length (N - 1) is delayed in the transmission path 7, etc. so that the received reference signal {ck} is output from the A/D converter 11 with a corresponding delay time. The correlation signal {fk} obtained by the convoluting operation of the received reference signal {ck} and the local reference signal (bk) from the coefficient register 14 (see FIGURE 4(c)) becomes an impulse signal as shown in FIGURE 4(d). The correlation signal {fk} at a time when the local reference signal {bk} is not delayed from the received reference signal {ck} becomes a main pulse with an amplitude of N/2 as shown in FIGURE 4(d). While at other times when the received reference signal {ck} is delayed from the local reference signal {bk} by the unit time, the correlation signal {fk} corresponding to a distortion of the transmission path 7, etc. is obtained. For instance, a sub-pulse between the main pulses shows a ghost signal occuring in the transmission path 7.

That is, the correlation signal {fk} output from the convolution operating circuit 13 represents the impulse response of the transmission path including the transmission signal originating equipment and the receiving apparatus (see Literature 1 for the details).

Actually, however, the level in the clamp period does not agree with 0 IRE due to an error of the clamp potential of the clamp circuit 10 and an error of the reference potential of the A/D converter 11. Thus the level of the received reference signal {ck} is offet by a DC offset $\Delta$. Even if there is no distortion in the transmission path, the level of the received reference signal {ck} becomes higher by the DC offset $\Delta$. As a result, the DC offset $\Delta$ is also added to the impulse response as shown in FIGURE 4(d). This DC offset $\Delta$ is equivalent to the multi-ghost response extending overall the delay time and severely disturbs a detection of the transmission path response.

To reduce the ratio of the DC offset $\Delta$ to the main impulse below -60 dB, it is necessary to satisfy the following equation (1).

$$20 \log (\Delta/(N/2) + \Delta) \eqsim 20 \log (\Delta/(N/2)) \leqq -60 \quad (1)$$

Accordingly, the upper limit of the DC offset $\Delta$ is determined by the following equation (2).

$$\Delta \leqq (N/2) \times 0.001 \quad (2)$$

where, 1 = 100 IRE.

When N = 64, the following equation (3) is established.

$$\Delta \leqq 3.2 \ IRE \quad (3)$$

From the value of the DC offset $\Delta$ of the equation (3), it is known that the circuit design and the power supply design must be carefully performed by paying attention to the DC offset $\Delta$.

Further, as is clear from the equation (2), the DC offset $\Delta$ is inversely proportional to the data length of the quasi noise data series {ak}. That is, if the data length of the quasi noise data series {ak} is shortened, an allowable upper limit for the DC offset $\Delta$ is lowered.

Now, as an impulse train {ak} suitable for a data transmission signal originating equipment of three values ("1", "0", "-1") to be transmitted according to a partial response system, a quasi noise data series having the logic "1" and the logic "-1" is considered. When this quasi noise data series {ak} is transmitted by composing on television signals at the transmission signal originating equipment, the local reference signal {ck} is set in the data train having the logic "1" and the logic "0". In this case, the DC offset value is (N/2)$\Delta$. Further, as the level differences between the logic "-1"

and the logic "1" are set at 100 IRE, the DC offset $\Delta$ must be set at 1/(2·(N/2)) times, i.e., (1/N) times for achieving the same detecting accuracy as shown in the drawing. That is, the DC offset $\Delta$ of the DC offset source 12 must be reduced to 0.05 IRE for reducing the ratio of the DC offset $\Delta$ to the main pulse value below -60 dB.

However, it is impossible to reduce the DC offset $\Delta$ to 0.05 IRE in practical applications. Further, if the ratio of the DC offset $\Delta$ to the main pulse is intended to be reduced below -40 dB, the DC offset $\Delta$ must be reduced to 0.5 IRE, but this is very difficult. When considering that the limit of the human ability for recognizing the ghost is about -40 dB, it is necessary to lower the DC offset $\Delta$ below 0.5 IRE, even if an extremely expensive circuit is used for effectively detecting the transmission path response.

The conventional transmission path response detection system has a problem that the transmission path detection accuracy is extremely low because the DC offset is enevitably accompanied in the transmisSion signal originating equipment.

The present invention therefore seeks to provide a transmission path response detection system which remarkably improves the detection accuracy of a transmission path response by cancelling DC offsets generated in the receiving apparatus.

A system for detecting a transmission path response for television signals according to one aspect of the present invention includes a signal originating equipment and a receiving apparatus wherein the signal originating equipment includes a reference signal generator for generating a quasi noise data series, a polarity reversing circuit for reversing the polarity of the quasi noise data series and a composing arrangement for composing the quasi noise data series and the polarity reversed quasi noise data series reversed by the polarity reversing means on two predetermined horizontal lines of a television signal at a prescribed period so as to transmit the composite television signal, and the receiving apparatus includes a receiving circuit for receiving a television signal which is composed with a quasi noise data series and a polarity reversed quasi noisenoise data series at a prescribed period and transmitted via a prescribed transmission path, a local reference signal generator for generating a local reference signal having a data series corresponding to the quasi noise data series composed in the television signal, a polarity reversing circuit for reversing the polarity of the local reference signal at a period corresponding to the reversed polarity period of the quasi noise data series, a convolution operating circuit for performing a convoluting operation on both the quasi noise data series from the receiving circuit and the local reference signal from the polarity reversing circuit, and a inter-field adding circuit for adding the correlation signals output from the convolution operating circuit before and after the reversed polarity period of the quasi noise data series together so as to detect a transmission characteristic of the transmission path.

In the transmission path response detection system according to another aspect, i.e., the second aspect of the present invention, the receiving apparatus includes a receiving circuit for receiving a television signal which is composed with a quasi noise data series and a polarity reversed quasi noise data series at a prescribed period and transmitted via a prescribed transmission path, a local reference signal generator for generating a local reference signal having a data series corresponding to the quasi noise data series composed in the television signal, a polarity reversing circuit for reversing the polarity of the local reference signal at a period corresponding to the reversed polarity period of the quasi noise data series, a convolution operating circuit for performing a convoluting operation on both the quasi noise data series from the receiving circuit and the local reference signal from the polarity reversing circuit and an adding circuit for adding the correlation signals output from the convolution operating circuit before and after the reversed polarity period of the quasi noise data series together so as to detect a transmission characteristic of the transmission path.

In the transmission path response detection system according to still another aspect, i.e., the third aspect of the present invention, the receiving apparatus includes a receiving circuit for receiving a television signal which is composed with a quasi noise data series and a polarity reversed quasi noise data series at a prescribed period and transmitted via a prescribed transmission path, a local reference signal generator for generating a local reference signal having a data series corresponding to the quasi noise data series composed in the television signal, a convolution operating circuit for performing a convoluting operation on both the quasi noise data series from the receiving circuit and the local reference signal and an adding circuit for adding the correlation signals output from the convolution operating circuit before and after the reversed polarity period of the quasi noise data series together so as to detect a transmission characteristic of the transmission path.

In the transmission path response detection system according to still another aspect, i.e., the fourth aspect of the present invention, the receiving apparatus is equipped with a receiving circuit for receiving a television signal which is composed with a quasi noise data series and a polarity reversed quasi noise data series at a prescribed period and transmitted via a prescribed transmission path, a local reference signal generator for generating a local reference signal having a data series corresponding to the quasi noise data series composed in the television signal, a convolution operating circuit for performing a convoluting operation on both the quasi noise data series from the receiving circuit and the local reference signal and a circuit for performing an adding operation on correlation signals output from the convolution operating circuit before and after the polarity reversing period of the quasi noise data series and a polarity reversing operation on the quasi noise series at the polarity reversing period together.

In the present invention, the transmission signal originating equipment transmits the quasi noise data series and the polarity reversed quasi noise data series by composing them on two prescribed horizontal lines of the television signal, wherein the polarity is reversed at a prescribed period. In the receiving apparatus, the local reference signal generator generates the local reference signal having the data series corresponding to the quasi noise data series. The receiving apparatus originally includes the DC offset source as described before. Thus a resulting output of the convoluting operation of the received quasi noise data series and the local reference signal includes the DC offset generated in the DC offset source. As the polarity reversing circuit reverses the polarity of the local reference signal applied to the convolution operating circuit at the quasi noise data series polarity reversing period, or the polarity of the output of the convolution operating circuit at the quasi noise data series polarity reversing period, the DC offset is reversed its polarity at the polarity reversing period of the quasi noise data series.

The DC offset is canceled when the adding circuit adds the signals output from the polarity reversing circuit before and after the polarity reversing period of the quasi noisenoise data series together. Both the polarity reversing operation of the correlation signal output from the convolution operating circuit and the adding operation of the adding circuit are carried out at a linear processing manner. Further, the DC offset can be removed even when the polarity is reversed by the polarity reversing circuit after an adding operation of the correlation signals output from the convolution operating circuit.

For a better understanding of the present invention reference will now be made by way of example to the accompanying drawings, wherein:

FIGURE 1 is a block diagram showing a conventional transmission path response detection system;

FIGURE 2 is a waveform diagram showing the composite signal from the adder 5 shown in FIGURE 1;

FIGURE 3 is a circuit diagram showing the convolution operating circuit 13 of FIGURE 1;

FIGURE 4 is a diagram for explaining the operation of a conventional transmission path response detection system shown in FIGURE 1;

FIGURE 5 is a block diagram showing a transmission signal originating equipment of the transmission path response detection system of one embodiment according to the present invention;

FIGURE 6 is a waveform diagram showing the composite signal from the adder 5 shown in FIGURE 5;

FIGURE 7 is a block diagram showing a receiving apparatus of the transmission path response detection system of the one embodiment according to the present invention;

FIGURE 8 is a diagram for explaining the operation of the embodiment shown in FIGURE 7;

FIGURE 9 is a block diagram showing a receiving apparatus of the transmission path response detection system of another embodiment according to the present invention;

FIGURE 10 is a diagram for explaining the operation of the embodiment shown in FIGURE 9;

FIGURE 11 is a block diagram showing a receiving apparatus of the transmission path response detection system of still another embodiment according to the present invention;

FIGURE 12 is a diagram for explaining the operation of the embodiment shown in FIGURE 11;

FIGURE 13 is a block diagram showing a receiving apparatus of the transmission path response detection system of still another embodiment according to the present invention;

FIGURE 14 is a diagram for explaining the operation of the embodiment shown in FIGURE 13; and

FIGURE 15 is a waveform diagram showing waveforms of the transmission signal in two periods when the quasi noise data series {ak} is replaced with the local reference signal {bk}.

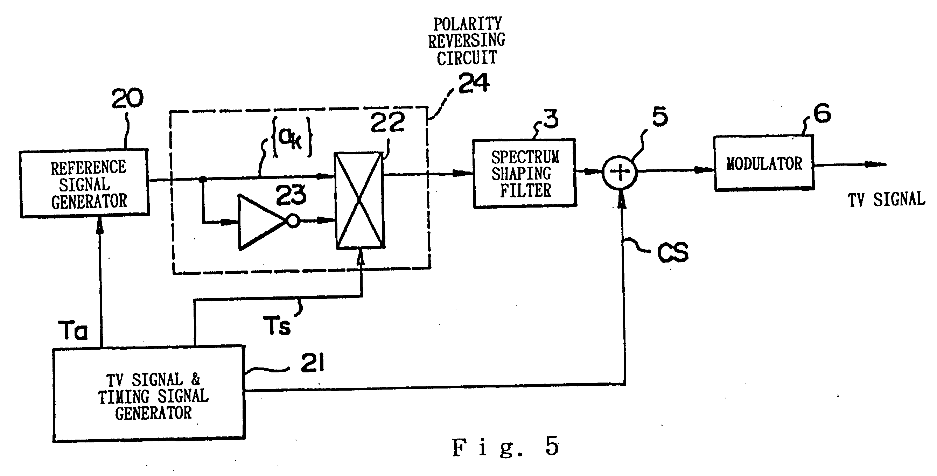

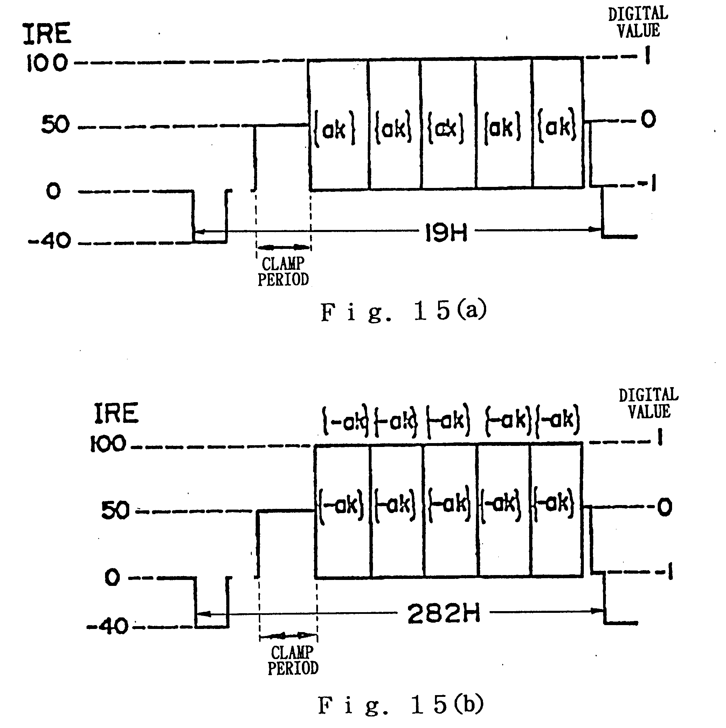

The present invention will be described in detail with reference to the FIGURES 5 through 15. Throughout the drawings, like or equivalent reference numerals or letters will be used to designate like or equivalent elements for simplicity of explanation.

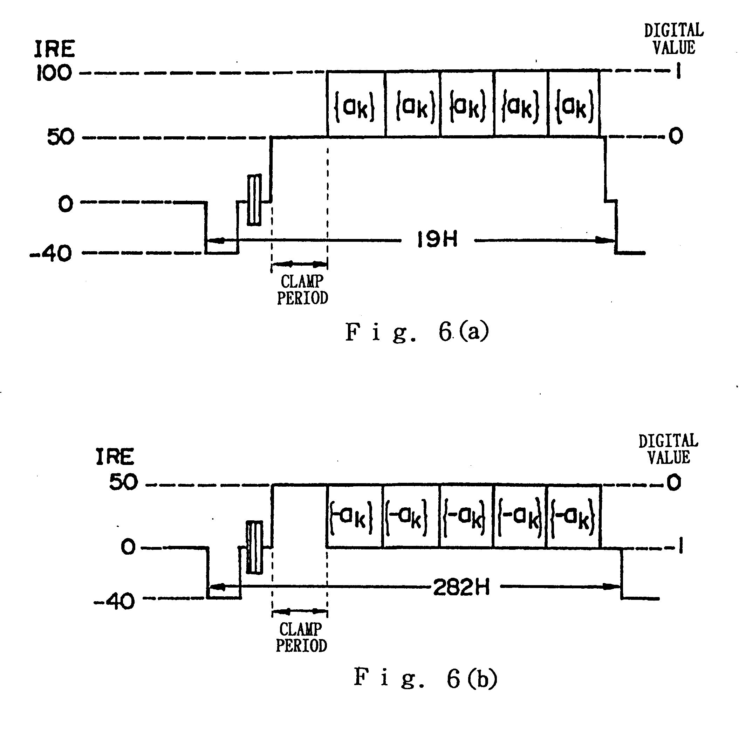

Referring now to FIGURES 5 and 6, a first embodiment of the transmission path response detection system according to the present invention will be described in detail.

FIGURE 5 is a block diagram showing a transmission signal originating equipment according to one embodiment of the transmission path response detection systems. In FIGURE 5, the symbols assigned to the same components shown in FIGURE 1 are also assigned.

A television signal and timing signal generator 21 generates a television signal CS containing synchronizing signals and burst signals, a timing signal Ta and a frame frequency (30 Hz) switching signal Ts of which level is switched at a television field period (1/60 sec). The television signal CS is supplied to an adder 5. The timing signal Ta is supplied to a reference signal generator 20 The frame frequency switching signal Ts is supplied to a selector 22. Based on the timing signal Ta, the reference signal generator 20 generates a quasi noise data series {ak} five times repeatedly a the timings of the 19H signal and the 282H signal occurring in the vertical retrace line period as a reference signal, likely to the conventional transmitter. This quasi noise data series {ak} has a data rate of 2fsc and a data length of (N - 1), that is, 63 (i.e., 32 data of the logic "1" and 31 data of the logic "0"). Further, the reference signal generator 20 generates a flat signal portion corresponding to a clamping period.

In this embodiment, the quasi noise data series {ak} output from the reference signal generator 20 is applied to a spectrum shaping filter 3 via a polarity reversing circuit 24. The polarity reversing circuit 24 includes a selector 22 and an inverter 23. The quasi noise data series {ak} from the reference signal generator 20 is directly input to the selector 22, while at the same time a polarity rversed quasi noise data series {-ak} which is the quasi noise data series {ak} reversed by the inverter 23 is also input to the selector 22. The selector 22 is controlled at the timing of the switching signal Ts supplied from the television signal and timing signal generator 21. Thus the data series {ak} and {-ak} are selectively output at the field period.

The signal output from the polarity reversing circuit 24 is applied to the adder 5 after shaped by the spectrum shaping filter 3. The adder 5 composes the signal output from the spectrum shaping filter 3 and the television signal CS. Thus, a composite signal from the adder 5 is supplied to a modulator 6. The modulator,6 forwards the composite signal to the transmission path (not shown) after modulating the composite signal in a vestigial sideband modulation manner.

FIGURE 6 is a waveform diagram showing the composite signal from the adder 5. FIGURE 6(a) shows the 19H signal, while FIGURE 6(b) shows the 282H signal.

As shown in FIGURE 6(a), the clamping period level of the quasi noise data series {ak} placed on the 19H signal is set at 50 IRE, the logic "0" level at 50 IRE and the logic "1" at 100 IRE. Further, as shown in FIGURE 6(b), the quasi noisenoise data series {-ak} placed on the 282H signal has a binary data of the logic "0" and the logic "-1". The clamping period level of the 282H signal is set at 50 IRE, the logic "0" at 50 IRE and the logic "-1" at 0 IRE. That is, the data amplitude is reduced to a half (1/2) of that in the conventional transmitter.

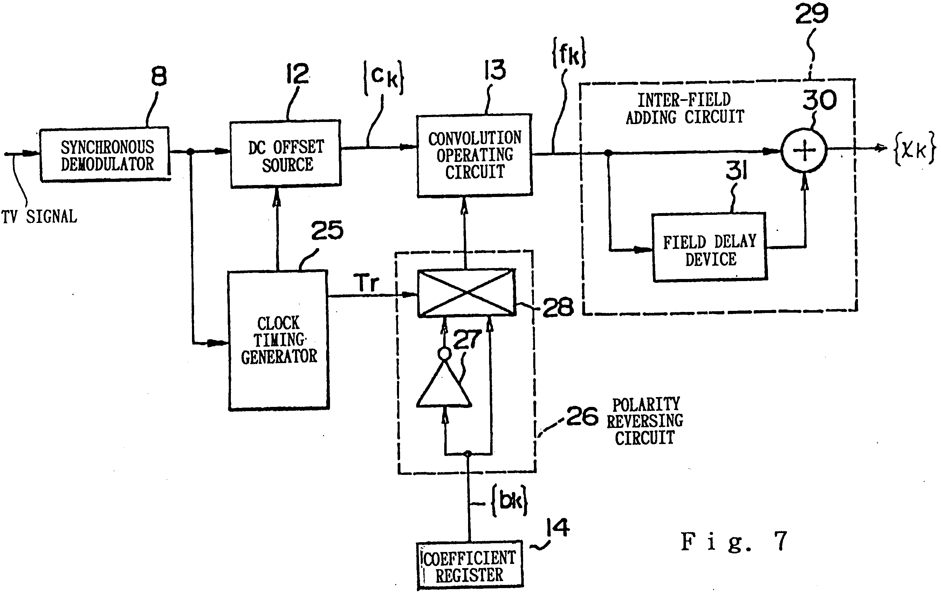

FIGURE 7 is a block diagram showing a receiving apparatus according to the embodiment of the transmission path response detection systems. In FIGURE 7, the same symbols are assigned to the same components as shown in FIGURE 1.

The television signal transmitted through the transmission path (not shown) is applied to a synchronous demodulator 8. The dmodulator 8 demodulates the input television signal so that a baseband television signal from the demodulator 8 is supplied to a DC offset source 12 and a clock timing generator 25. The clock timing generator 25 generates a clamp timing signal, a 2fsc clock and a switching signal Tr of which level is switched at the field period. The switching signal tr is supplied to a selector as described later.

The DC offset source 12 is comprised of a clamping circuit and an A/D converter, likely to the conventional receiver. The clamping circuit clamps the level of the clamping period of the television signal at 50 IRE according to a clamp timing signal and a clock from the clock timing generator 25. The A/D converter digitizes the television signal so that received reference signals {ck} and {-ck} corresponding to the quasi noise data series {ak} and {-ak} are supplied from the DC offset source 12 to a convolution operating circuit 13. These received reference signals {ck} and {-ck} are accompanied with a DC offset.

On the other hand, a coefficient register 14 provides a local reference signal {bk} which corersponds to the quasi noisenoise data series {ak} replaced its logic "0" by the logic "-1". This local reference signal {bk} is applied to a selector 28 directly or through an inverter 27 in a polarity reversing circuit 26. Thus the local reference signal {bk} and its polarity reversed signal {-bk} are applied to the selector 28. The selector 28 is controlled at the timing of the field frequency switching signal Tr from the clock timing generator 25. Thus the selector 28 selectively outputs the local reference signal {bk} from the coefficient register 14 and its reversed signal {-bk} at the field period. That is, the selector 28 selects the local reference signal {bk} output from the coefficient register 14 at the high level (hereinafter referred to as "H" level) timing of the switching signal Tr, or selects the polarity reversed local reference signal {-bk} output from the inverter 27 at the low level (hereinafter referred to as "L" level) timing of the switching signal Tr.

The selected signal from the polarity reversing circuit 26 is applied to the convolution operating circuit 13. The convolution operating circuit 13 performs a convoluting operation of the received reference signals {ck} and {-ck} from the DC offset source 12 and the data series of the local reference signal {bk} and {-bk} from the polarity reversing circuit 26 for finding a correlation signal {fk} between the signals {ck} and {bk}, or the signals {-ck} and {-bk}. Then the correlation signal {fk} is supplied to an inter-field adding circuit 29.

The inter-field adding circuit 29 cantains an adder 30 and a field delay device 31. The field delay device 31 passes the correlation signal {fk} output from the convolution operating circuit 13 to the adder 30 after delaying it for one field period. Further the adder 30 directly receives the correlation signal {fk} output from the convolution operating circuit 13. Thus, the adder 30 outputs the transmission path response signal {xk} by its adding operation for the correlation signals {fk} before and after the one field delay.

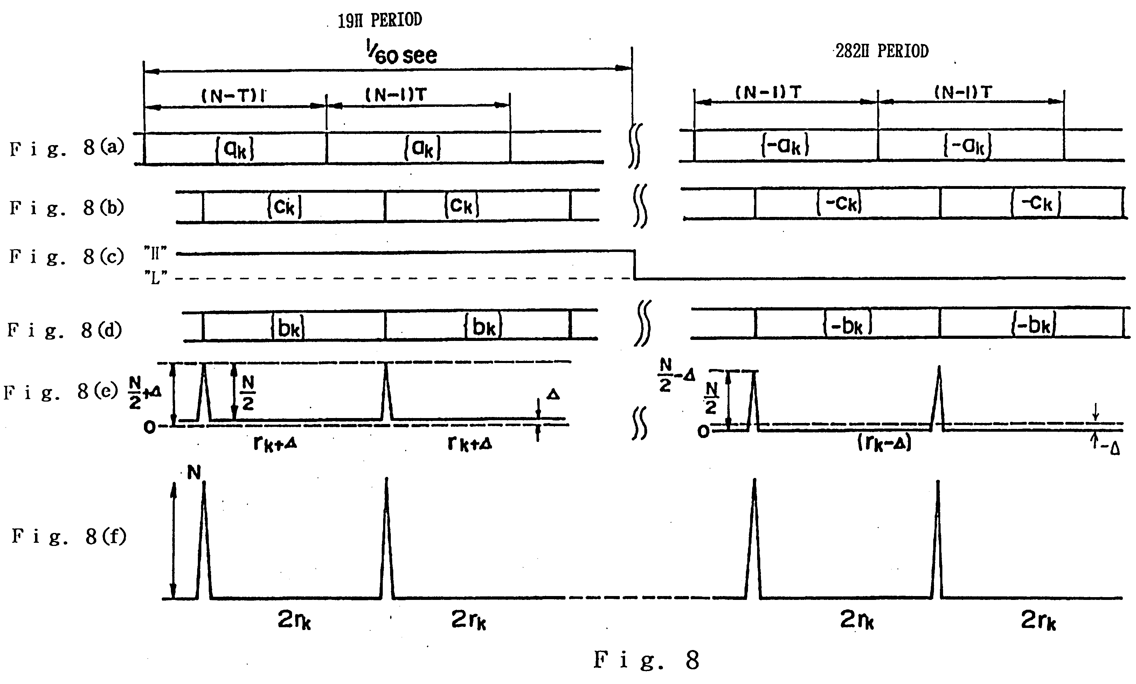

Now, the operation of the transmission path response detection system in this configuration will be explained in reference to the explanatory diagram shown in FIGURE 8. FIGURE 8(a) shows the quasi noise data series {ak} included in the transmitted television signal. FIGURE 8(b) shows the signal output from the DC offset source 12. FIGURE 8(c) shows the switching signal Tr. FIGURE 8(d) shows the signal output from the polarity reversing circuit 26 which is input to the convolution operating circuit 13. FIGURE 8(e) shows the correlation signal {fk}. And FIGURE 8(f) shows the transmission path response signal {xk}. Further, to make the explanation simple, it is assumed that the transmission path response of the transmission path over the transmission signal originating equipment and the receiving apparatus has no distortion.

The television signal containing the composed quasi noisenoise data series {ak} and {-ak} as shown in FIGURES 8(a) and 8(b) is input to the synchronous demodulator 8. In this synchronous demodulator 8, the television signal is synchronously demodulated so that the base-band television signal obtained by the synchronous demodulation is applied to the DC offset source 12. The television signal is not only clamped to the 50 IRE in the clamping period, but also digitized. Then, the received reference signal {ck} resulted from the digitazation is applied to the convolution operating circuit 13.

On the other hand, the polarity of the local reference signal {bk} from the coefficient register 14 is reversed at the field period by the polarity reversing circuit 26 so taht the local reference signals {bk} and {-bk} are applied to the convolution operating circuit 13.

Now, it is assumed that the 19H signal of the television signal has been received. As shown in FIGURE 8(a), the quasi noise data series {ak} with the positive polarity is assigned to the 19H signal. Accordingly, the received reference signal {ck} with the positive polarity is applied to the convolution operating circuit 13 as shown in FIGURE 8(b). On the other hand, the switching signal Tr from the clock timing generator 25 is assigned to the "H" level (see FIGURE 8(c)) in this case. Thus the selector 28 selects the local reference signal {bk} directly applied from the coefficient register 14. That is, the local reference signal {bk} with the positive polarity is applied to the convolution operating circuit 13 through the selector 28 as shown in FIGURE 8(d).

Accordingly, the correlation signal {fk} output from the convolution operating circuit 13 has a waveform the same the one in the conventional receiver, as shown in FIGURE 8(f). Here, {ak}*{b-k} = {rk} is established (wherein the symbol * shows the convoluting operation). That is, when a DC offset value is represented as $\Delta$, the correlation signal {fk} is expressed in the following equation (4):

$$\{fk\} = \{ck\}*\{bk\}$$
$$= (\{ak\} + \Delta)\}*\{bk\}$$
$$= \{rk\} + \Delta \qquad\qquad \cdots\cdots\cdots (4)$$

wherein it is assumed that $\Delta*\{bk\} = \Delta$.

As shown in the equation (4) and FIGURE 8(e), the DC offset 4 is added to the correlation signal {fk}.

Now, it is assumed that the 282H signal of the television signal has been received. As shown in FIGURE 8(b), the reversed polarity quasi noise data series {-ak} is applied to the synchronous demodulator 8. The baseband television signal resulted from the synchronous demodulator 8 is supplied to the DC offset source 12 so that the reversed polarity received reference signal {-ck}, as shown in FIGURE 8(b), resulted from the A/D conversion is applied to the convolution operating circuit 13.

On the other hand, the switching signal Tr from the clock timing generator 25 is assigned to the "L" level (see FIGURE 8(c)) in this period so that the selector 28 selects the reversed polarity local reference signal {-bk} output from the inverter 27. That is, the reversed polarity local reference signal {-bk} is applied to the convolution operating circuit 13, as shown in FIGURE 8(d). The convolution operating circuit 13 performs the convoluting operation of the reversed polarity received reference signal {-ck} and the reversed polarity local reference signal {-bk} for finding the correlation signal {fk}. Since the reversed polarity quasi noise data series {-ak} is comprised of the logic "-1" and the logic "0". Also the reversed polarity local reference signal {-bk} is comprised of the logic "1" and the logic "-1". Thus when the DC offset is ignored, the correlation signal {fk} takes an impulse response waveform with an amplitude of N/2, in similar to the case of the 19H signal.

Here, in case of taking the DC offset $\Delta$ into consideration the correlation signal {fk} is expressed in the following equation (5) using the impulse response {rk} = {-ak}r{-bk}:

$$\{fk\} = \{-ck\}*\{-bk\}$$

$$= (\{-ak\} + \Delta)*\{-bk\}$$

$$= \{rk\} - \Delta \qquad\qquad \dots\dots\dots (5)$$

As shown by this equation (5) and FIGURE 8(e), the DC offset added to the correlation signal {fk} is represented as $-\Delta$. Thus it takes a polarity opposite to the DC offset added in the case of the 19H signal.

The correlation signal {fk} output from the convolution operating circuit 13 is not only applied directly to the adder 30 but also applied through the field delay device 31 for delaying for one field period the correlation signal {fk}. That is, the correlation signals {fk} given by the equations (4) and (5) are input to the adder 30. The adder 30 adds the correlation signals {fk} before and after the one field delay together and then outputs a resultant sum as the transmission path response signal {xk}. When adding the equations (4) and (5), the DC offset $\Delta$ is canceled and 2rk impulse response is obtained. That is, as shown in FIGURE 8(f), the transmission path response signal {xk} with the DC offset canceled is obtained.

As described above, the above embodiment obtains the transmission path response signal {xk} which has been cancelled the DC offset therefrom, by reversing in the transmission signal originating equipment the polarity of the quasi noise data series {ak} at the field period, and also reversing in the reciever side the polarity of the local reference signal {bk} to be applied to the convolution operating circuit 13 at the field period and then adding the correlation signals {fk} and {-fk} before and after one field period together. As the transmission path response signal can be removed the DC offset therfrom, it is possible to detect at an extremely high accuracy the transmission path response.

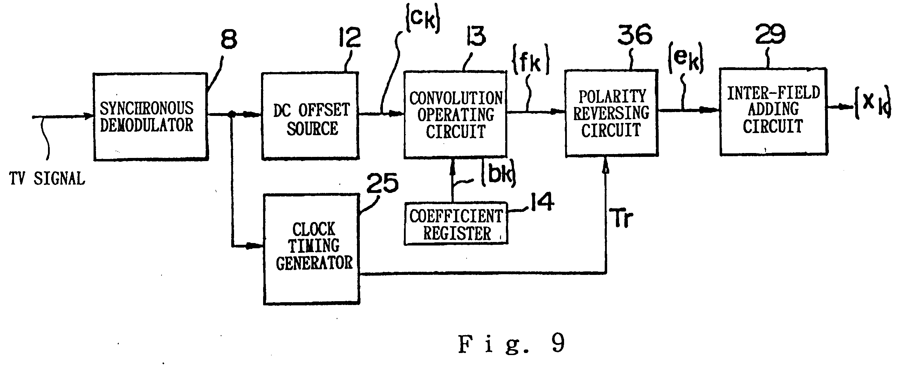

FIGURE 9 is a block diagram showing another embodiment of the receiving apparatus of the transmission path response detection system according to the present invention. In FIGURE 9, the same symbols are assigned to the same components shown in FIGURE 7, thus their explanations will be omitted hereinafter for simplicity of explanation.

The transmitter according to this embodiment has the same construction as that shown in FIGURE 5. The receiving apparatus system in this embodiment differs from the former embodiment shown in FIGURE 7 in following points. That is, the local reference signal {bk} read out from the coefficient register 14 is directly supplied to the convolution operating circuit 13, and then the correlation signal {fk} output from the convolution operating circuit 13 is supplied to the inter-field adding circuit 29 via the polarity reversing circuit 36. The polarity reversing circuit 36 has the same construction as the polarity reversing circuit 26 shown in FIGURE 7. Other portions in the receiver side of this embodiment are the same as those shown in FIGURE 7.

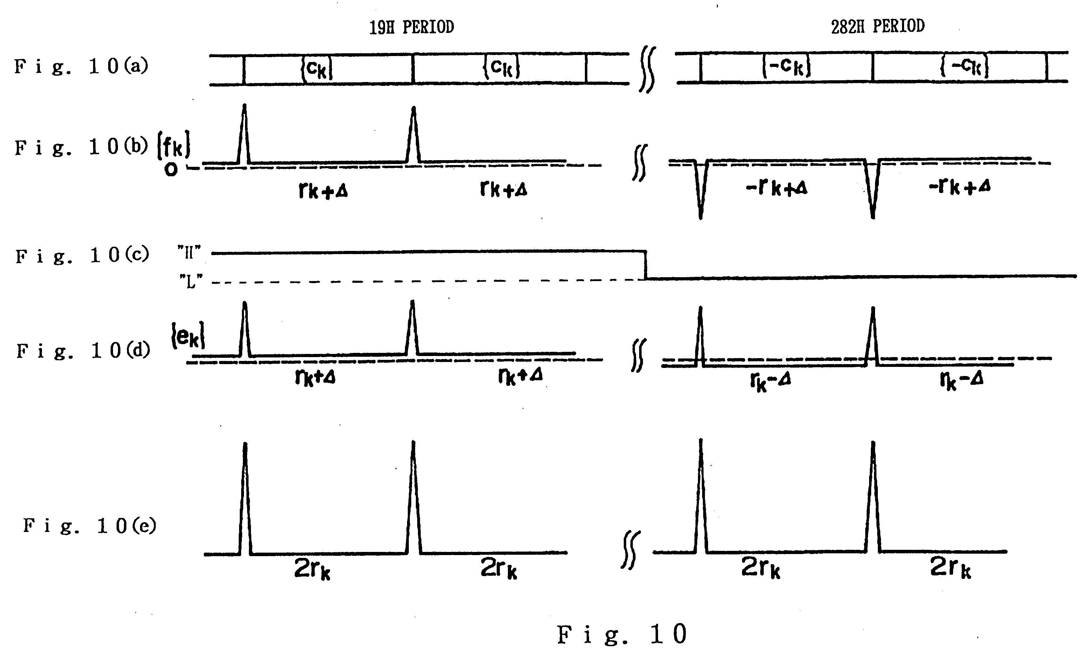

Now the operation of the system in this embodiment will be explained in reference to the explanatory diagram shown in FIGURE 10. FIGURE 10(a) shows the received reference signal {ck} from the DC offset source 12. FIGURE 10(b) shows the correlation signal {fk}. FIGURE 10(c) shows the switching signal Tr. FIGURE 10(d) shows the signal {ek} output from the polarity reversing circuit 36. And FIGURE 10(e) shows the transmisison path response signal {xk} from the inter-field adding circuit 29. Further, for convenience of the explanation, it is assumed that the transmission path including the transmission side and the receiving apparatus has no distortion.

In this embodiment, the sequence of the polarity reversing operation and the convoluting operation is changed each other in comparison to that in the former embodiment. However, the same effect is resulted because they are carried out at a linear processing manner. In this embodiment, the local reference signal {bk} is constantly provided to the convolution operating circuit 13 from the coefficient register 14. During the reception of television signal at the 19H period, the received reference signal {ck} with the positive polarity is supplied to the convolution operating circuit 13 from the DC offset source 12 (see FIGURE 10(a)). Accordingly, a received reference signal the same as the received reference signal obtained in the conventional receiver is input to the convolution operating circuit 13 in this case. Thus, the main impulse of the correlation signal {fk} has the positive polarity, and the impulse response still includes the DC offset $\Delta$, as shown in FIGURE 10(b).

On the other hand, during the reception of television signal at the 282H period, the reversed polarity received reference signal {-ck} is applied to the convolution operating circuit 13 from the DC offset source 12 (see FIGURE 10(a)). In this case, the main impulse of the correlation signal {fk} output from the convolution operating circuit 13 has the negative polarity, and the impulse response still includes the DC offset $\Delta$. That is, the polarity reversed correlation signal {-fk} is output from the convolution operating circuit 13 as shown in FIGURE 10(b)).

The correlation signals {fk} and {-fk} output from the convolution operating circuit 13 are supplied to the interfield adding circuit 29 via the polarity reversing circuit 36. The polarity reversing circuit 36 selectively outputs the correlation signals {fk} and {-fk} from the convolution operating circuit 13 at the field period, based on the switching signal Tr supplied from the clock timing generator 25, of which level varies at the field period. As shown in FIGURE 10(c), the switching signal Tr is in the "H" level, during the reception of the television signal in the 19H period. In this period, the polarity reversing circuit 36 passes the correlation signal {fk} as a signal {ek} (see FIGURE 10(d)) to the inter-field adding circuit 29 without reversing the polarity. This signal {ek} output from the polarity reversing circuit 36 is expressed in the following equation (6);

$$
\begin{aligned}
\{ek\} &= \{fk\} \\
&= \{ck\} * \{bk\} \\
&= (\{ak\} + \Delta)\} * \{bk\} \\
&= \{rk\} + \Delta \qquad\qquad \ldots\ldots\ldots (6)
\end{aligned}
$$

On the other hand, the switching signal Tr is in the "L" level (see FIGURE 10(c)), during the reception of the television signal in the 282H period. In this period, the polarity of the correlation signal is reversed so that a signal {ek} as shown in FIGURE 10(a) or the polarity reversed siognal {-fk} is supplied to the inter-field adding circuit 29 from the polarity reversing circuit 36. The signal {ek} in this case is expressed in the following equation (7);

$$
\begin{aligned}
\{ek\} &= \{-fk\} \\
&= -\{-ck\} * \{bk\} \\
&= -(\{-ak\} + \Delta)\} * \{bk\} \\
&= \{rk\} - \Delta \qquad\qquad \ldots\ldots\ldots (7)
\end{aligned}
$$

The inter-field adding circuit 29 includes the field delay device 31 (see FIGURE 7), thus the signal {ek} at the 19H period is delayed by one field. The delayed signal {ek} = {rk} + 4 is added to the other output {ek} = {rk} - 4 at the 282H signal which is directly applied to the adder 30 (see FIGURE 7). As clear from the equations (6) and (7), the DC offsets Δ and -Δ ARE canceled with each other. Accordingly, the transmission path response detection signal with the DC offset removed is obtained from the inter-field adding circuit 29 as shown in FIGURE 10(e).

As described above, the same effect as in the first embodiment shown in FIGURE 7 is achieved in this embodiment.

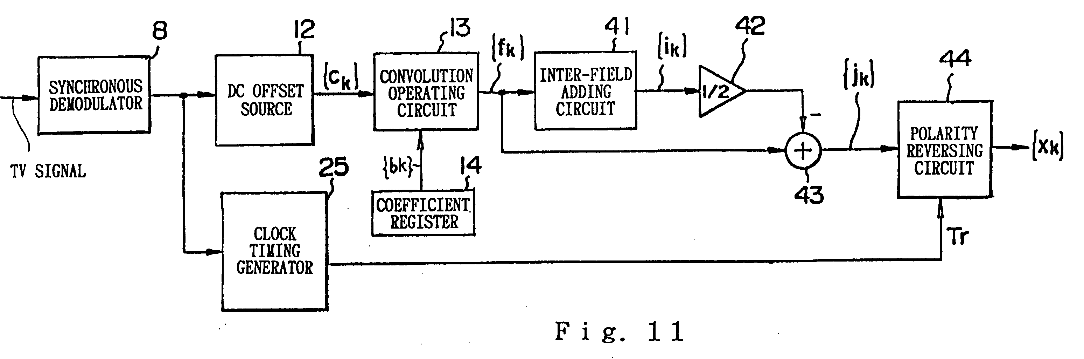

FIGURE 11 is a block diagram showing still another embodiment of the receiving apparatus of the transmission path response detection system according to the present invention. In FIGURE 11, the same symbols are assigned to the same components shown in FIGURE 9, thus their explanations will be omitted hereinafter for simplicity of explanation.

The transmitter according to this embodiment has the same construction as that shown in FIGURE 5. In this embodiment, the correlation signal {fk} output from the convolution operating circuit 13 is applied to both an interfield adding circuit 41 and an inter-field adding circuit 41 which have the same constructions as the inter-field adding circuit 29 and the polarity reversing circuit 26 shown in FIGURE 7. Other portions in the receiver side of this embodiment are the same as those shown in FIGURE 7. The inter-field adding circuit 41 adds the correlation signals {fk} from the convolution operating circuit 13 before and after one field period together and applies the sum to an attenuator 42. The attenuator 42 halves (1/2) the signal {ik} output from the inter-field adding circuit 41 and then applies the halved signal to an adder 43. The adder 43 subtracts the halved signal output from the attenuator 42 from the correlation signal {fk} applied from the convolution operating circuit 13 and then applies the subtraction signal to the polarity reversing circuit 44. The polarity reversing circuit 44 selectively outputs the subtraction signal output from the adder 43 and its polarity reversed signal at the field period, based on the switching signal Tr supplied from the clock timing generator 25, of which level varies at the field period. The signal output from the polarity reversing circuit 44 is obtained as the transmission path response signal {xk}.

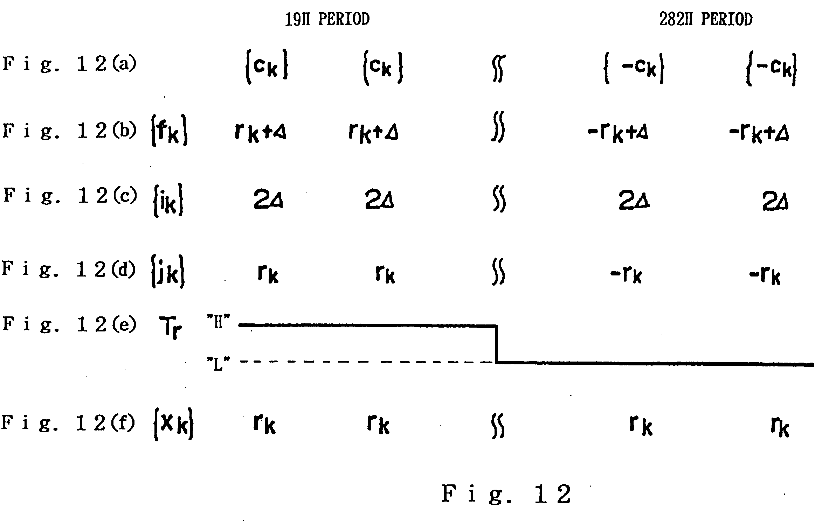

Now the operation of this embodiment in the construction as described above will be explained in reference to the explanatory diagram shown in FIGURE 12. FIGURE 12 shows several signals in the 19H period and the 282H period in numerical equations. FIGURE 12(a) shows the digitized signal {ck} output from the DC offset source 12. FIGURE 12(b) shows the correlation signal {fk} output from the convolution operating circuit 13. FIGURE 12(c) shows the signal {ik} output from the inter-field adding circuit 41. FIGURE 12(d) shows the selecting signal Tr output from the clock timing generator 25. And FIGURE 12(f) shows the transmission path response signal {xk} output from the polarity reversing circuit 44.

In similar to the second embodiment shown in FIGURE 5, the correlation signal {fk} output from the convolution operating circuit 13 has the vale of rk + $\Delta$ when receiving the 19H signal, while the signal {fk} has the value of -rk + $\Delta$ when receiving the 282H signal (see FIGURE 8(b)). The inter-field adding circuit 41 adds the correlation signals {fk} before and after one field period together. Thus the signal {ik} output from the inter-field adding circuit 41 becomes 2$\Delta$ in both of the 19H period and the 282H period, as shown in FIGURE 12(c). This signal of 2$\Delta$ output from the inter-field adding circuit 41 is multiplied by 1/2 in the attenuator 42. Thus the DC offset with the value of $\Delta$ is applied to the adder 43.

On the other hand, the correlation signal {fk} shown in FIGURE 12(b) is also applied to the adder 43. The adder 43 subtracts the DC offfset $\Delta$ supplied from the attenuator 42 from the correlation signal {fk} and then supplies its subtraction signal {jk}, as shown in FIGURE 12(d), to the polarity reversing circuit 44. Thus, the subtraction signal {jk} has the value of rk in the 19H period, while the subtraction signal {jk} has the value of -rk in the 282H period. As shown in FIGURE 12(e), the switching signal Tr is in the "H" level (see FIGURE 12(e)), during the reception of the television signal in the 19H period. In this period, the polarity reversing circuit 44 passes the subtraction signal {jk} with the value of rk as the transmission path response signal {xk} (see FIGURE 12(f)). The switching signal Tr is in the "L" level (see FIGURE 12(e)), during the reception of the television signal in the 282H period. In this period, the polarity reversing circuit 44 passes the subtraction signal {jk} with the value of -rk as the transmission path response signal {xk} (see FIGURE 12(f)).

As described above, in this embodiment, the transmission path response signal {xk} with the DC offset removed is obtained, in similar to the embodiment shown in FIGURE 7.

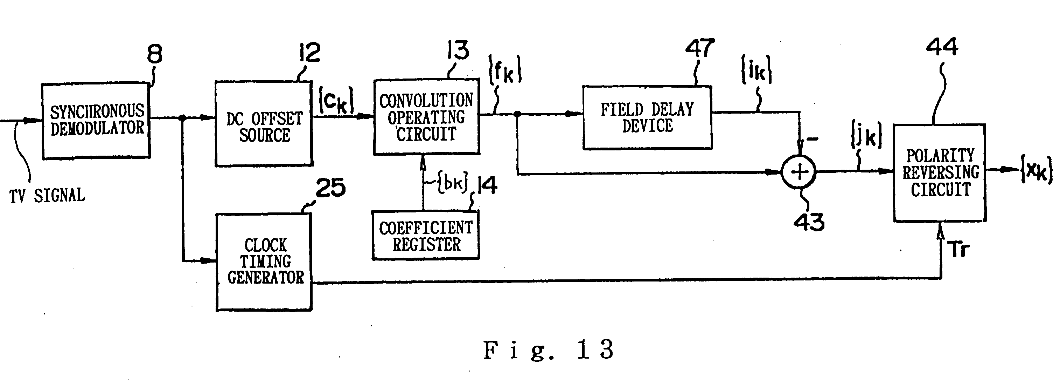

FIGURE 13 is a block diagram showing still another embodiment of the receiving apparatus of the transmission path response detection system according to the present invention. In FIGURE 13, the same symbols are assigned to the same components shown in FIGURE 11, thus their explanations will be omitted hereinafter for simplicity of explanation.

This embodiment differs from the embodiment shown in FIGURE 11 in the following points. That is, a field delay device 47 is provided between the convolution operating circuit 13 and the adder 43, instead of series circuit of the inter-field adding circuit 41 and the attenuator 42 as shown in FIGURE 11.

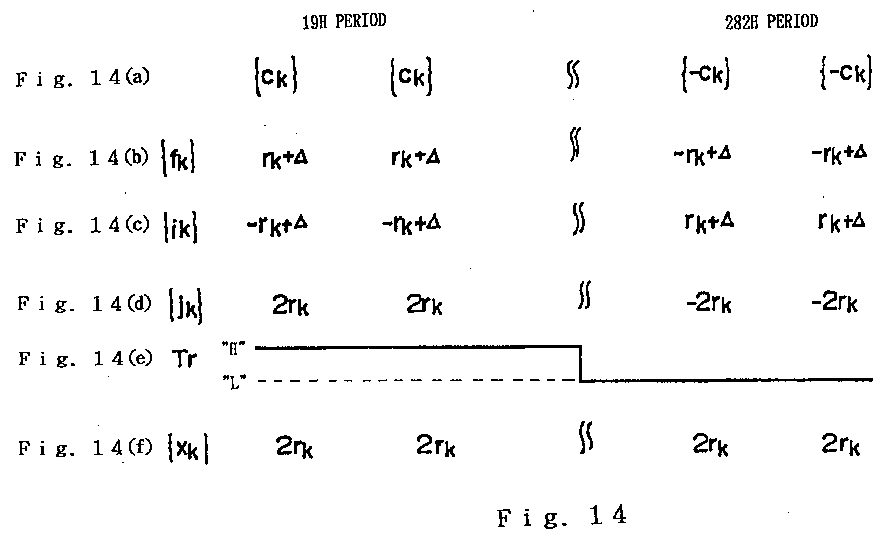

Now the operation of this embodiment in the construction as described above will be explained in reference to the explanatory diagram shown in FIGURE 14. FIGURE 14 shows several signals in the 19H period and the 282H period in numerical equations. FIGURE 14(a) shows the signal {ck} output from the DC offset source 12. FIGURE 14(b) shows the correlation signal {fk} output from the convolution operating circuit 13. FIGURE 14(c) shows the signal {ik} output from the field delay device 47. FIGURE 14(d) shows the signal {jk} output from the adder 43. FIGURE 14(e) shows the switching signal Tr. And FIGURE 14(f) shows the transmission path response signal {sk} from the polarity reversing circuit 44.

In similar to the embodiment shown in FIGURE 5, the correlation signal {fk} output from the convolution operating circuit 13 has the value of rk + $\Delta$, while the signal {fk} has the value of -rk + $\Delta$ when receiving the 282H signal (see FIGURE 14(b)). The field delay device 47 delays the correlation signal {fk} by one field. Thus the delayed signal {ik} output from the field delay device 47 is applied to the adder 43. As a result, the delayed signal {ik} of the correlation signal {fk} in the 19H period, which has the value of -rk + $\Delta$, and the other correlation signal {fk} in the 282H period, which has the value of rk + $\Delta$, are applied together into the adder 43 (see FIGURE 14(c)).

The adder 43 subtracts the correlation signals {fk} with the values -rk + $\Delta$ and rk + $\Delta$, which correspond to the correlation signals before and after one field period. As is clear from FIGURES 14(b) and 14(c), the subtraction signal {jk} from the adder 43 in the 19H period becomes 2rk, while the subtarction signal {jk} in the 282H period becomes -2rk. As shown in FIGURE 14(e), the switching signal Tr is in the "H" level (see FIGURE 12(e)) during the reception of the television signal in the 19H period. In this period, the polarity reversing circuit 44 passes the subtraction signal {jk} with the value of 2rk as the transmission path response signal {xk} (see FIGURE 14(f)). The switching signal Tr is in the "L" level (see FIGURE 14(e)) during the reception of the television signal in the 282H period. In this period, the polarity reversing circuit 44 passes the subtraction signal {jk} with the value of -2rk as the transmission path response signal {xk} (see FIGURE 14(f)).

As described above, in this embodiment, the transmission path response signal {xk} with the DC offset removed is obtained, in similar to the embodiment shown in FIGURE 3.

In those embodiments described above, the quasi noise data series {ak} having the logic "1" and the logic "0" is transmitted from the transmission signal originating equipment by being composed on the television signal. Then the receiving apparatus obtains the transmission path response signal, through the convoluting operation of the received reference signal {ck} and the local reference signal {bk} with the logic "0" in the quasi noise data series {ak} replaced by the logic "-1". Therefore it is easily understood that the same operation and effect as those in the above embodiments are obtained even if the quasi noise data series {ak} and the local reference signal {bk} are replaced with each other. Transmission signal waveforms in this case are shown in FIGURE 11. FIGURE 11(a) shows the waveform of the 19H signal, while FIGURE 11(b) shows the waveform of the 282H signal.

Further, the present invention is not limited to the embodiments as described above. For instance, in the embodiments shown above, the polarity of the corelation signal resulted by the convoluting operation is reversed in accordance with the polarity of the quasi noise data series The polarity reversed correlation signal is then added with the other correlation signal with the polarity not reversed so that the DC offset is removed from the detected transmission path response signal. However, it is clear that the field delay device contained in the inter-field adding circuit can be replaced by a line register which is adapted for storiing a result of every convoluting operation. Thus in this case, the adding operation or the subtracting operation can be performed by using the stored data in the line register.

In particular, in the embodiments as shown in FIGURES 11 and 13, the last polarity reversing operation as performed in the polarity reversing circuit 44 is not necessarily required, because the DC offset has been already removed before the polarity reversing operation and thus correct detection signal with the positive or negative polarity is obtained.

Further, the reference signals are not limited to the quasi noise data series, but any signals adapted for obtaining the transmission characteristics through the convoluting operation will be used. Furthermore, it is clear that the present invention can be applied not only to the detection of the transmission path response of television signals but also to detections of general signal transmission characteristics or waveform transmisison characteristics, etc.

As described above, the present invention has an advantage of remarkably improving an accuracy for detecting the transmission path response according to its ability for cancelling the DC offset which inevitably occurs in the receiving apparatus. Accordingly, the present invention can provide an extremely preferable transmission path response detection system.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a divisional application.

## Claims

1. A system for detecting a transmission path response fortelevision signals comprising a signal originating equipment having a reference signal generator for generating a quasi noisenoise data series and a receiving apparatus, CHARACTERIZED IN THAT:

    the signal originating equipment includes;

    polarity reversing means (24) for reversing the polarity of the quasi noise data series, and

    composing means (5, 21) for composing the quasi noisenoise data series and the polarity reversed quasi noise data series reversed by the polarity reversing means (24) on two predetermined horizontal lines of a television signal at a prescribed period so as to transmit the composite television signal; and

the receiving apparatus includes;

receiving means (12) for receiving a television signal which is composed with a quasi noise data series and a polarity reversed quasi noise data series at a prescribed period and transmitted via a prescribed transmission path,

local reference signal generating means (14) for generating a local reference signal having a data series corresponding to the quasi noise data series composed in the television signal,

polarity reversing means (26) for reversing the polarity of the local reference signal at a period corresponding to the reversed polarity period of the quasi noise data series,

convolution operating means (13) for performing a convoluting operation on both the quasi noise data series from the receiving means (12) and the local reference signal from the polarity reversing means (26), and

inter-field adding means (29) for adding the correlation signals output from the convolution operating means (13) before and after the reversed polarity period of the quasi noise data series together so as to detect a transmission characteristic of the transmission path.

2. A system for detecting a transmission path response for television signals comprising a signal originating equipment having a reference signal generator for generating a quasi noisenoise data series and a receiving apparatus, CHARACTERIZED IN THAT:

the signal originating equipment includes;

polarity reversing means (24) for reversing the polarity of the quasi noise data series, and

composing means (5) for composing the quasi noise data series and the polarity reversed quasi noise data series reversed by the polarity reversing means (24) on two predetermined horizontal lines of a television signal at a prescribed period so as to transmit the composite television signal; and

the receiving apparatus includes;

receiving means (12) for receiving a television signal which is composed with a quasi noise data series and a polarity reversed quasi noise data series at a prescribed period and transmitted via a prescribed transmission path,

local reference signal generating means (14) for generating a local reference signal having a data series corresponding to the quasi noise data series composed in the television signal,

convolution operating means (13) for performing a convoluting operation on both the quasi noise data series from the receiving means (12) and the local reference signal,

polarity reversing means (36) for reversing the polarity of the correlation signal from the convolution operating means (13) at a period corresponding to the reversed polarity period of the quasi noise data series, and

inter-field adding means (29) for adding the correlation signals before and after the reversed polarity period of the quasi noise data series together so as to detect a transmission characteristic of the transmission path.

3. A system for detecting a transmission path response for television signals comprising a signal originating equipment having a reference signal generator for generating a quasi noisenoise data series and a receiving apparatus, CHARACTERIZED IN THAT:

the signal originating equipment includes;

polarity reversing means (24) for reversing the polarity of the quasi noise data series, and

composing means (5) for composing the quasi noise data series and the polarity reversed quasi noise data series reversed by the polarity reversing means (24) on two predetermined horizontal lines of a television signal at a prescribed period so as to transmit the composite television signal; and

the receiving apparatus includes;

receiving means (12) for receiving a television signal which is composed with a quasi noise data series and a polarity reversed quasi noise data series at a prescribed period and transmitted via a prescribed transmission path,

local reference signal generating means (14) for generating a local reference signal having a data series corresponding to the quasi noise data series composed in the television signal,

convolution operating means (13) for performing a convoluting operation on both the quasi noise data series from the receiving means (12) and the local reference signal from the reference signal generating means (14),

inter-field adding means (41) for adding the correlation signals with an inter-field relation from the convolution operating means (13),

subtracting means (42, 43) for performing a subtracting operation between the correlation signal obtained from the convolution operating means (13) and the signal obtained from the inter-field adding means (41), and

polarity reversing means (44) for reversing the subtraction signal obtained from the subtracting means (42, 43) at a period corresponding to the reversed polarity period of the quasi noise data series.

4. A television signal originating equipment for a transmission path response detection system comprising a reference signal generator for generating a quasi noise data series, CHARACTERIZED IN THAT the television signal originating equipment further comprises:

polarity reversing means (24) for reversing the polarity of the quasi noise data series; and

composing means (5, 21) for composing the quasi noise data series and the polarity reversed quasi noise data series reversed by the polarity reversing means (24) on two predetermined horizontal lines of a television signal at a prescribed period so as to transmit the composite television signal.

5. A receiving apparatus for a transmission path response detection system, CHARACTERIZED IN THAT the receiving apparatus comprises:

receiving means (12) for receiving a television signal which is composed with a quasi noise data series and a polarity reversed quasi noise data series at a prescribed period and transmitted via a prescribed transmission path;

local reference signal generating means (14) for generating a local reference signal having a data series corresponding to the quasi noise data series composed in the television signal;

polarity reversing means (26) for reversing the polarity of the local reference signal at a period corresponding to the reversed polarity period of the quasi noise data series;

convolution operating means (13) for performing a convoluting operation on both the quasi noise data series from the receiving means (12) and the local reference signal from the polarity reversing means (26); and

inter-field adding means (29) for adding the correlation signals output from the convolution operating means (13) before and after the reversed polarity period of the quasi noise data series together so as to detect a transmission characteristic of the transmission path.

6. A receiving apparatus for a transmission path response detection system, CHARACTERIZED IN THAT the receiving apparatus comprises:

receiving means (12) for receiving a television signal which is composed with a quasi noise data series and a polarity reversed quasi noise data series at a prescribed period and transmitted via a prescribed transmission path;

local reference signal generating means (14) for generating a local reference signal having a data series corresponding to the quasi noise data series composed in the television signal;

convolution operating means (13) for performing a convoluting operation on both the quasi noise data series from the receiving means (12) and the local reference signal from the local reference signal generating means (14); and

polarity reversing means (36) for reversing the polarity of the correlation signal from the convolution operating means (13) at a period corresponding to the reversed polarity period of the quasi noise data series;

inter-field adding means (29) for adding the correlation signals output from the convolution operating means (13) before and after the reversed polarity period of the quasi noise data series together so as to detect a transmission characteristic of the transmission path.

7. A receiving apparatus for a transmission path response detection system, CHARACTERIZED IN THAT the receiving apparatus comprises:

receiving means (12) for receiving a television signal which is composed with a quasi noise data series and a polarity reversed quasi noise data series at a prescribed period and transmitted via a prescribed transmission path;

local reference signal generating means (14) for generating a local reference signal having a data series corresponding to the quasi noise data series composed in the television signal;

convolution operating means (13) for performing a convoluting operation on both the quasi noise data series from the receiving means (12) and the local reference signal from the local reference signal generating means (14); and

means (41, 42, 43) for performing an adding operation on correlation signals output from the con-

EP 0 505 043 A1

volution operating means (13) before and after the polarity reversing period of the quasi noise data series and a polarity reversing operation on the quasi noise series at the polarity reversing period together.

8. A method for detecting a transmission path response for television signals, CHARACTERIZED IN THAT the method comprises the steps of:

generating a quasi noise data series;

reversing the polarity of the quasi noise data series;

composing the quasi noise data series and the polarity reversed quasi noise data series reversed in the polarity reversing step on two predetermined horizontal lines of a television signal at a prescribed period so as to transmit the composite television signal;

receiving the composite television signal which is composed with a quasi noise data series and a polarity reversed quasi noise data series at a prescribed period and transmitted via a prescribed transmission path,

generating a local reference signal having a data series corresponding to the quasi noise data series composed in the television signal;

reversing the polarity of the local reference signal at a period corresponding to the reversed polarity period of the quasi noise data series;

performing a convoluting operation on both the quasi noisenoise data series obtained in the receiving step and the local reference signal generated in the polarity reversing step; and

adding the correlation signals with an inter-field relation obtained in convolution operating step before and after the reversed polarity period of the quasi noise data series together so as to detect a transmission characteristic of the transmission path.

9. A method for detecting a transmission path response for television signals, CHARACTERIZED IN THAT the method comprises the steps of:

generating a quasi noise data series;

reversing the polarity of the quasi noise data series;

composing the quasi noise data series and the polarity reversed quasi noise data series reversed in the polarity reversing step on two predetermined horizontal lines of a television signal at a prescribed period so as to transmit the composite television signal;

receiving the composite television signal which is composed with a quasi noise data series and a polarity reversed quasi noise data series at a prescribed period and transmitted via a prescribed transmission path,

generating a local reference signal having a data series corresponding to the quasi noise data series composed in the television signal;

performing a convoluting operation on both the quasi noisenoise data series obtained by the receiving step and the local reference signal generated in the local reference signal generating step;

reversing the polarity of the correlation signal obtained by the convolution operating step at a period corresponding to the reversed polarity period of the quasi noise data series; and

adding the correlation signals with an inter-field relation before and after the reversed polarity period of the quasi noise data series together so as to detect a transmission characteristic of the transmission path.

10. A method for detecting a transmission path response for television signals, CHARACTERIZED IN THAT the method comprises the steps of:

generating a quasi noise data series;

reversing the polarity of the quasi noise data series;

composing the quasi noise data series and the polarity reversed quasi noise data series reversed by the polarity reversing step on two predetermined horizontal lines of a television signal at a prescribed period so as to transmit the composite television signal;

receiving the composite television signal which is composed with a quasi noise data series and a polarity reversed quasi noise data series at a prescribed period and transmitted via a prescribed transmission path;

generating a local reference signal having a data series corresponding to the quasi noise data series composed in the television signal;

performing a convoluting operation on both the quasi noisenoise data series obtained in the receiving step and the local reference signal generated in the reference signal generating step;

adding the correlation signals with an inter-field relation obtained in the convolution operating step;

15

performing a subtracting operation between the correlation signal obtained in the convolution operating step and the signal obtained in the inter-field adding step; and

reversing the subtraction signal obtained in the subtracting step at a period corresponding to the reversed polarity period of the quasi noise data series.

11. A transmission path response detection system, CHARACTERIZED IN THAT the system comprises:

a reference signal generator (20) for generating a quasi noise data series;

polarity reversing means (24) for reversing the polarity of the quasi noise data series; and

composing means (5) for composing the quasi noise data series and the polarity reversed quasi noise data series reversed by the polarity reversing means (24) on two predetermined horizontal lines of a television signal at a prescribed period so as to transmit the composite television signal.

12. A transmission path response detection system, CHARACTERIZED IN THAT the system comprises:

receiving means (12) for receiving a television signal which is composed with a quasi noise data series and a polarity reversed quasi noise data series at a prescribed period and transmitted via a prescribed transmission path;

local reference signal generating means (14) for generating a local reference signal having a data series corresponding to the quasi noise data series composed in the television signal;

polarity reversing means (26) for reversing the polarity of the local reference signal at a period corresponding to the reversed polarity period of the quasi noise data series;

convolution operating means (13) for performing a convoluting operation on both the quasi noise data series from the receiving means (12) and the local reference signal from the polarity reversing means (14); and

inter-field adding means (29) for adding the correlation signals output from the convolution operating means (13) before and after the reversed polarity period of the quasi noise data series together so as to detect a transmission characteristic of the transmission path.

13. A transmission path response detection system, CHARACTERIZED IN THAT the system comprises:

receiving means (12) for receiving a television signal which is composed with a quasi noise data series and a polarity reversed quasi noise data series at a prescribed period and transmitted via a prescribed transmission path;

local reference signal generating means (14) for generating a local reference signal having a data series corresponding to the quasi noise data series composed in the television signal;

convolution operating means (13) for performing a convoluting operation on both the quasi noise data series from the receiving means (12) and the local reference signal;

polarity reversing means (36) for reversing the polarity of the correlation signal from the convolution operating means (13) at a period corresponding to the reversed polarity period of the quasi noise data series; and

inter-field adding means (29) for adding the correlation signals before and after the reversed polarity period of the quasi noise data series together so as to detect a transmission characteristic of the transmission path.

14. A transmission path response detection system, CHARACTERIZED IN THAT the system comprises:

receiving means (12) for receiving a television signal which is composed with a quasi noise data series and a polarity reversed quasi noise data series at a prescribed period and transmitted via a prescribed transmission path;

local reference signal generating means (14) for generating a local reference signal having a data series corresponding to the quasi noise data series composed in the television signal;

convolution operating means (13) for performing a convoluting operation on both the quasi noise data series from the receiving means (12) and the local reference signal from the reference signal generating means (14);

inter-field adding means (41) for adding the correlation signals with an inter-field relation from the convolution operating means (13);

subtracting means (42, 43) for performing a subtracting operation between the correlation signal obtained from the convolution operating means (13) and the signal obtained from the inter-field adding means (41); and

polarity reversing means (44) for reversing the subtraction signal obtained from the subtracting means (42, 43) at a period corresponding to the reversed polarity period of the quasi noise data series.

15. A transmission path response detection system as claimed in any one of claims 12, 13 and 14, CHARACTERIZED IN THAT the receiving means (12) adapted for receiving a television signal transmitted from a transmitting means comprising a reference signal generator (20) for generating a quasi noise data series, a polarity reversing means (24) for reversing the polarity of the quasi noise data series, and a composing means (5) for selectively composing the quasi noise data series and the polarity reversed quasi noisenoise data series reversed by the polarity reversing means (24) on two predetermined horizontal lines of a television signal at a prescribed period so as to transmit the composite television signal.

TRANSMITTER

REFERENCE SIGNAL GENERATOR — 2

SPECTRUM SHAPING FILTER — 3

{ak}

TV SIGNAL & TIMING SIGNAL GENERATOR — 4

CS

5

MODULATOR — 6

Ta

TRANSMISSION PATH — 7

TV SIGNAL

SYNCHRONOUS DEMODULATOR — 8

CLOCK TIMING GENERATOR — 9

DC OFFSET SOURCE — 12

CLAMP CIRCUIT — 10

A/D CONVERTER — 11

{ck}

CONVOLUTION OPERATING CIRCUIT — 13

{fk}

bk

COEFFICIENT REGISTER — 14

1

F i g. 1
(PRIOR ART)

IRE

19H PERIOD
282H PERIOD

DIGITAL VALUE

100 ———
WHITE PEAK
LEVEL

$\{\alpha_k\}$  $\{\alpha_k\}$  $\{\alpha_k\}$  $\{\alpha_k\}$  $\{\alpha_k\}$

PEDESTAL
LEVEL

O ———

$(N-1)T$

-40 ———

CLAMP
PERIOD

F i g. 2
( PRIOR ART )

$\{C_k\}$

M1  M2  M3  MN-2  MN-1

A2  A3  AN-2  AN-1

T  $\bigoplus$  T  $\bigoplus$  $\bigoplus$  T  $\bigoplus$  T  $\{f_k\}$

D1  D2  DN -2  DN -1

b1  b2  b3  bN-2  bN-1

F i g. 3
( PRIOR ART )

Fig. 4(a) ak

Fig. 4(b) ck

Fig. 4(c) bk

Fig. 4(d) fk

$\{ak\}$    $\{ak\}$

$\{ck\}$    $\{ck\}$

$\{bk\}$    $\{bk\}$

N-1    N-1

$\frac{N}{2}+4$

Fig. 4
(PRIOR ART)

POLARITY
REVERSING
CIRCUIT

20

24

22

REFERENCE
SIGNAL
GENERATOR

$\{a_k\}$

23

3

SPECTRUM
SHAPING
FILTER

5

6

MODULATOR

TV SIGNAL

CS

Ta

Ts

21

TV SIGNAL &
TIMING SIGNAL
GENERATOR

F i g. 5

EP 0 505 043 A1

Fig. 6 (a)

Fig. 6 (b)

Fig. 7

Fig. 8

TV SIGNAL → SYNCHRONOUS DEMODULATOR 8 → DC OFFSET SOURCE 12 → $\{c_k\}$ → CONVOLUTION OPERATING CIRCUIT 13 → $\{f_k\}$ → POLARITY REVERSING CIRCUIT 36 → $\{e_k\}$ → INTER-FIELD ADDING CIRCUIT 29 → $\{x_k\}$

CLOCK TIMING GENERATOR 25

COEFFICIENT REGISTER 14 → $\{b_k\}$

Tr

Fig. 9

EP 0 505 043 A1

19H PERIOD                                                    282H PERIOD

F i g. 1 0 (a)    {c_k}          {c_k}                   {-c_k}           {-c_k}

F i g. 1 0 (b) {f_k}
             0
                  r_k+Δ          r_k+Δ                   -r_k+Δ          -r_k+Δ

F i g. 1 0 (c)  "H"
                "L"

F i g. 1 0 (d) {e_k}
                  r_k+Δ          r_k+Δ                   r_k-Δ           r_k-Δ

F i g. 1 0 (e)
                  2r_k           2r_k                    2r_k            2r_k

F i g.  1 0

Fig. 11

EP 0 505 043 A1

|  | | 19Π PERIOD | | | 282Π PERIOD | |
|---|---|---|---|---|---|---|
| F i g. 1 2 (a) | | $\{c_k\}$ | $\{c_k\}$ | $\int\int$ | $\{-c_k\}$ | $\{-c_k\}$ |
| F i g. 1 2 (b) | $\{f_k\}$ | $r_k + \Delta$ | $r_k + \Delta$ | $\int\int$ | $-r_k + \Delta$ | $-r_k + \Delta$ |
| F i g. 1 2 (c) | $\{i_k\}$ | $2\Delta$ | $2\Delta$ | $\int\int$ | $2\Delta$ | $2\Delta$ |
| F i g. 1 2 (d) | $\{j_k\}$ | $r_k$ | $r_k$ | $\int\int$ | $-r_k$ | $-r_k$ |

F i g. 1 2 (e)  $T_r$  "Π" ⎯⎯⎯⎯⎯⎯⎯⎯⎯ "L" − − − − − − −

| F i g. 1 2 (f) | $\{x_k\}$ | $r_k$ | $r_k$ | $\int\int$ | $r_k$ | $r_k$ |

F i g. 1 2

```
TV SIGNAL  29
```

SYNCHRONOUS DEMODULATOR  8

DC OFFSET SOURCE  12    $\{c_k\}$

CONVOLUTION OPERATING CIRCUIT  13    $\{f_k\}$

FIELD DELAY DEVICE  47    $\{l_k\}$

$\{j_k\}$

POLARITY REVERSING CIRCUIT  44    $\{x_k\}$

COEFFICIENT REGISTER    $\{b_k\}$  14

CLOCK TIMING GENERATOR  25

43    Tr

Fig. 13

EP 0 505 043 A1

19H PERIOD                                    282H PERIOD

Fig. 14(a)        $\{c_k\}$        $\{c_k\}$        $\wr\wr$        $\{-c_k\}$        $\{-c_k\}$

Fig. 14(b) $\{f_k\}$    $r_k+\Delta$     $r_k+\Delta$     $\wr\wr$     $-r_k+\Delta$     $-r_k+\Delta$

Fig. 14(c) $\{i_k\}$    $-r_k+\Delta$    $-r_k+\Delta$    $\wr\wr$     $r_k+\Delta$      $r_k+\Delta$

Fig. 14(d) $\{j_k\}$    $2r_k$           $2r_k$           $\wr\wr$     $-2r_k$           $-2r_k$

Fig. 14(e)  Tr   "H" ────────────────────────────┐
                                                  │
                 "L" - - - - - - - - - - - - - - -└──────────────────────

Fig. 14(f) $\{x_k\}$    $2r_k$           $2r_k$           $\wr\wr$     $2r_k$            $2r_k$

F i g.  1 4

EP 0 505 043 A1

IRE
DIGITAL VALUE

100 ----------------------------------------- 1

50 ---------------- {ak} {ak} {ak} {ak} {ak} ---- O

0 -------------------------------------------- -1

-40 ------------------- 19H ------------------

CLAMP PERIOD

F i g. 1 5 (a)

IRE
DIGITAL VALUE

{-ak} {-ak} {-ak} {-ak}{-ak}

100 ----------------------------------------- 1

50 ---------------- {-ak} {-ak} {-ak} {-ak} {-ak} ---- O

0 -------------------------------------------- -1

-40 ------------------- 282H ------------------

CLAMP PERIOD

F i g. 1 5 (b)

**European Patent Office**

# EUROPEAN SEARCH REPORT

Application Number

EP 92 30 1594

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | US-A-5 060 067 (LEE et al.) * Column 1, lines 32-59; column 4, line 45 - column 6, line 29 * | 4,11 | H 04 N 17/00 |
| P,A | | 1-3,5-10,12-14,15 | |
| D,A | IEEE TRANSACTIONS ON CONSUMER ELECTRONICS, vol. 36, no. 4, November 1990, pages 794-806, New York, US; J.-D. WANG et al.: "Training signal and receiver design for multi-path channel characterization for TV broadcasting" * Page 799, left-hand column, lines 4-18; page 801, left-hand column - page 803, right-hand column * | 1-15 | |
| A | EP-A-0 328 461 (ETAT FRANCAIS) * Page 2, line 48 - page 3, line 19; page 5, lines 44-55; figure 4 * | 1-15 | |
| A | PROCEEDINGS OF THE THIRD INTERNATIONAL WORKSHOP ON HDTV. SIGNAL PROCESSING OF HDTV, II, Turin, 30th August - 1st September 1989, ed. Cselt, pages 503-509; K. NAKAMURA et al.: "An adaptive equalizer for HDTV receiver" * Pages 503-505; figures 2,3 * | 1-15 | TECHNICAL FIELDS SEARCHED (Int. Cl.5) H 04 N |
| A | PATENT ABSTRACTS OF JAPAN, vol. 9, no. 201 (E-336), 17th August 1985; & JP-A-60 064 579 (SANYO) 13-04-1985 | | |

The present search report has been drawn up for all claims

| Place of search | Date of completion of the search | Examiner |
|---|---|---|
| THE HAGUE | 22-06-1992 | BERWITZ P. |

EPO FORM 1503 03.82 (P0401)